# EUROPÄISCHE PATENTSCHRIFT

(11) **EP 2 896 098 B1**
(45) Veröffentlichungstag und Bekanntmachung des Hinweises auf die Patenterteilung: **28.06.2017**
(21) Anmeldenummer: 13735023.7
(22) Anmeldetag: 10.07.2013
(51) Int. Cl.: H02G 15/10

(54) **HÜLSENDICHTUNG**
SLEEVE SEAL
JOINT À MANCHON

(30) Priorität: 14.09.2012 DE 102012216383
(43) Veröffentlichungstag der Anmeldung: 22.07.2015
(73) Patentinhaber: Phoenix Contact GmbH & Co. KG, 32825 Blomberg (DE)
(72) Erfinder: SCHRADER, Andreas, 33129 Delbrueck (DE); WEGENER, Jürgen, 91483 Oberscheinfeld (DE)
(74) Vertreter: Patentship Patentanwaltsgesellschaft mbH
(86) Internationale Anmeldenummer: PCT/EP2013/064529
(87) Internationale Veröffentlichungsnummer: WO 2014/040772

(56) Entgegenhaltungen:
- EP-A1- 0 187 636
- EP-A2- 0 133 371
- EP-A2- 1 233 232
- WO-A1-2009/085026
- AU-A4- 2010 100 308
- CN-U- 201 973 694
- CN-U- 202 158 410
- CN-Y- 201 043 697
- DE-A1- 2 111 922
- DE-A1- 4 110 455
- DE-A1-102008 034 956
- FR-A1- 2 758 017
- US-A- 3 663 740
- US-A1- 2010 110 685

## Beschreibung

Die vorliegende Erfindung betrifft eine Hülsendichtung zum Abdichten eines Leitungsverbindungsbereichs von Leitungen gegen Feuchtigkeit.

Systeme zum Abdichten von Stromversorgungsleitungen an LED-Streifen können derart aufgebaut sein, dass ein vorhandener, nicht wasserfester LED-Streifen, in einer Leiste befestigt wird und durch Löten oder mittels Hülsendichtung mit entsprechenden Anschlussleitungen verbunden wird. Die Wasserfestigkeit für Anwendungen im Außenbereich wird dann durch Vergießen der gesamten Leiste mit einer transparenten Masse hergestellt. Diese Vorgehensweise ist aufwendig und für einen Benutzer relativ unflexibel, da dieser die derart vorkonfektionierte, wasserfeste LED-Leiste nicht mehr in der Länge variieren kann.

In anderen Anwendungen kann der Leiteranschluss des LED-Streifens durch einen Schrumpfschlauch gegen Spritzwasser geschützt sein. Hierbei muss der Anwender eine Wärmequelle in Form eines Heißluftgerätes verwenden, um den Schrumpfschlauch an die Leiter und den LED-Streifen anzupassen. Außerdem ist die Wasserfestigkeit nur im geringen Maße gegeben, da bei einem Mehrleiteranschluss noch Feuchtigkeit zwischen den einzelnen Leitungen eindringen kann.

Bei anderen wasserfesten LED-Streifen kann der wasserfeste Leiteranschluss dadurch erreicht werden, dass die Leiter zur Stromversorgung mit der flexiblen Leiterplatte des LED-Streifen verbunden werden und der Anschlussbereich durch eine transparente Dichtmasse gegen Eindringen von Wasser geschützt wird. Auch bei dieser Anwendung ist der Montageaufwand für den Anwender sehr hoch. Zusätzlich wird Zeit benötigt, bis die Dichtmasse ausgehärtet oder vernetzt ist.

Die Druckschrift DE 10 2008 034 956 A1 beschreibt ein Verbindungselement für mit Leuchtmitteln bestückte, streifenförmige Leiterplatten zur Bildung bandförmiger und/oder flächiger Beleuchtungen. Zum Schutz vor Wasser können die Leiterplatten in durchsichtigen Rohren angeordnet sein.

Die Druckschrift DE 21 11 922 A1 betrifft eine lösbare, hochspannungsfeste Dichtungsstelle für Leiteranordnungen. Die lösbare Kabelverbindung umfasst ein Dichtungselement und eine das Dichtungselement spielfrei umgebende Metallhülse. Die Druckschrift DE 21 11 922 A1 offenbart somit eine Hülsendichtung zum Abdichten eines Leitungsverbindungsbereichs gegen Feuchtigkeit, mit einem Hülsengehäuse, das über einem Leitungsverbindungsbereich positionierbar ist; und mit einem Dichtelement zum Abdichten des Hülsengehäuses gegen Feuchtigkeit. Die Druckschrift WO2009/085026 A1 betrifft eine Hülsendichtung zum Abdichten eines Leitungsverbindungsbereichs von LED-Streifen gegen Feuchtigkeit, mit einem Schrumpfschlauch, der über einem Leitungsverbindungsbereich verschiebbar positionierbar ist.

Die Druckschrift FR 2 758 017 A1 betrifft ein Schutzgehäuse zum Spleißen von Kabeln. Das Schutzgehäuse umfasst eine Röhre, die an jedem Ende durch eine Anordnung zweier fester Scheiben abgedichtet ist.

Die Druckschrift US 3,663,740 A betrifft ein Spleißgehäuse für unterschiedliche Arten von Kabeln. Ein Dichtschuh ist mit einer gezackten Innenfläche gebildet.

Die Druckschrift DE 41 10 455 A1 betrifft eine elektrisch isolierende Umhüllung für eine Verbindungsstelle wie Endknoten oder Durchgangsknoten von außerhalb der Verbindungsstelle Isolierungen aufweisenden elektrisch leitenden Elementen.

Die Druckschrift EP 1 233 232 A2 betrifft eine Beleuchtungseinrichtung mit einem dreiadrigen Leiterstreifen, der in axialer Richtung mit in Reihe hintereinander angeordneten LED-Elementen elektrisch leitend verbunden ist.

Die Druckschrift EP 0 133 371 A2 betrifft eine Anordnung zur Bildung einer Verbindung zwischen einer Mehrzahl von elektrischen Kabeln.

Es ist die der Erfindung zugrundeliegende Aufgabe, eine schnelle und ohne großen Aufwand herzustellende, wasserfeste Abdichtung einer Leitungsverbindung zu ermöglichen.

Diese Aufgabe wird durch Gegenstände mit den Merkmalen nach den unabhängigen Ansprüchen gelöst. Vorteilhafte Ausführungsformen der Erfindung sind Gegenstand der Figuren, der Beschreibung und der abhängigen Ansprüche.

Gemäß einem Aspekt der Erfindung wird die Aufgabe durch eine Hülsendichtung gemäß Anspruch 1 gelöst. Dadurch wird beispielsweise der technische Vorteil erreicht, dass sich eine wasserdichte und einfach herzustellende Abdichtung zwischen zwei Leitungen herstellen lässt.

In einer vorteilhaften Ausführungsform der Hülsendichtung ist das Dichtelement an einer Innenwandung des Hülsengehäuses positionierbar oder positioniert. Dadurch wird beispielsweise der technische Vorteil erreicht, dass sich eine gute Abdichtung des Hülsengehäuses erzielen lässt.

In einer weiteren vorteilhaften Ausführungsform der Hülsendichtung ist das Dichtelement eine Dichthülse ist, welche in das Hülsengehäuse einschiebbar ist oder welche an einer Innenwandung des Hülsengehäuses gebildet oder angeformt, insbesondere angespritzt ist. Dadurch wird beispielsweise ebenfalls der technische Vorteil erreicht, dass sich eine gute Abdichtung des Hülsengehäuses erzielen lässt und die Hülsendichtung auf technisch einfache Weise hergestellt werden kann.

In einer weiteren vorteilhaften Ausführungsform der Hülsendichtung umfasst das Dichtelement einen Dichthülsenkörper und eine an einer Innenwandung des Dichthülsenkörpers angeordnete Dichtung. Dadurch wird beispielsweise der technische Vorteil erreicht, dass sich die Abdichtung noch weiter verbessern lässt.

In einer weiteren vorteilhaften Ausführungsform der Hülsendichtung umfasst die Dichtung eine zumindest teilweise umlaufende elastische Lamelle oder eine Mehrzahl von zumindest teilweise umlaufenden elastischen Lamellen, welche hintereinander angeordnet sind. Dadurch wird beispielsweise der technische Vorteil erreicht, dass die Lamellen ein Eindringen von Wasser verhindern.

In einer weiteren vorteilhaften Ausführungsform der Hülsendichtung ist das Dichtelement stirnseitig beidseitig oder einseitig offen. Dadurch wird beispielsweise der technische Vorteil erreicht, dass in das Dichtelement von einer oder zwei Seiten Leitungen eingeschoben werden können.

In einer weiteren vorteilhaften Ausführungsform der Hülsendichtung weist das Dichtelement eine einem Inneren des Hülsengehäuses zugewandte erste Stirnseite und eine dem Inneren des Hülsengehäuses abgewandte zweite Stirnseite auf, wobei die erste Stirnseite offen ist und wobei die zweite Stirnseite durch eine Wandung gebildet ist, in welcher zumindest eine Öffnung zur Aufnahme eines Leitungskabels vorgesehen ist. Dadurch wird beispielsweise der technische Vorteil erreicht, dass das Hülsengehäuse zum Abdichten gegenüber einem Kabel verwendet werden kann.

In einer weiteren vorteilhaften Ausführungsform der Hülsendichtung ist das Dichtelement zum Abdichten eines ersten Abschnitts des Hülsengehäuses vorgesehen und ein weiteres Dichtelement ist zum Abdichten eines zweiten Abschnitts des Hülsengehäuses vorgesehen. Dadurch wird beispielsweise der technische Vorteil erreicht, dass eine zweiseitige Abdichtung gegenüber einer Leitung erreicht wird.

In einer weiteren vorteilhaften Ausführungsform der Hülsendichtung sind die Abschnitte einander gegenüber angeordnet. Dadurch wird beispielsweise der technische Vorteil erreicht, dass die Hülsendichtung von beiden Seiten abdichtet.

In einer weiteren vorteilhaften Ausführungsform der Hülsendichtung sind das Dichtelement und das weitere Dichtelement seitlich an einander gegenüber liegenden Seiten in das Hülsengehäuse einschiebbar oder an einer Innenwandung des Hülsengehäuses gebildet oder angeformt, insbesondere angespritzt. Dadurch wird beispielsweise der technische Vorteil erreicht, dass sich die Hülsendichtung zusammensetzen lässt und auf technisch einfache Weise hergestellt werden kann.

In einer weiteren vorteilhaften Ausführungsform der Hülsendichtung umfasst das weitere Dichtelement einen Dichthülsenkörper und eine an einer Innenwandung des Dichthülsenkörpers angeordnete Dichtung. Dadurch wird beispielsweise ebenfalls der technische Vorteil erreicht, dass sich die Abdichtung noch weiter verbessern lässt.

In einer weiteren vorteilhaften Ausführungsform der Hülsendichtung weist das Hülsengehäuse einen rechteckförmigen Querschnitt, insbesondere einen rechteckförmigen Querschnitt mit abgerundeten Ecken, auf. Dadurch wird beispielsweise der technische Vorteil erreicht, dass ein Verkanten des Gehäuses in schwierigen Einbausituationen verhindert wird.

In einer weiteren vorteilhaften Ausführungsform der Hülsendichtung sind das Hülsengehäuse und das jeweilige Dichtelement aus Kunststoff geformt. Dadurch wird beispielsweise der technische Vorteil erreicht, dass sich das Gehäuse auf einfache technische Weise herstellen lässt.

In einer weiteren vorteilhaften Ausführungsform der Hülsendichtung ist das Hülsengehäuse transparent. Dadurch wird beispielsweise der technische Vorteil erreicht, dass LEDs, die im Inneren des Hülsengehäuses liegen, hindurchleuchten und die Wahrnehmbarkeit der Hülsendichtung vermindert wird.

Gemäß einem zweiten Aspekt wird die Aufgabe durch eine Leitungsanordnung gelöst, mit einer ersten Leitung, insbesondere einer LED-Streifenleitung und einer zweiten Leitung, welche in einem Verbindungsbereich miteinander elektrisch verbunden sind; und einer Hülsendichtung nach dem ersten Aspekt zum Abdichten des Verbindungsbereichs gegen Feuchtigkeit. Dadurch werden die gleichen technischen Vorteile, wie durch die Hülsendichtung nach dem ersten Aspekt erreicht.

Ausführungsbeispiele der Erfindung sind in den Zeichnungen dargestellt und werden im Folgenden näher beschrieben.

Es zeigen:
- Fig. 1: eine perspektivische Ansicht einer Hülsendichtung mit eingesetztem Kabel und LED-Streifen;
- Fig. 2: eine perspektivische Ansicht der Hülsendichtung mit getrenntem Kabel und LED-Streifen;
- Fig. 3: eine perspektivische Ansicht der Hülsendichtung von der Seite zum Einsetzen des LED-Streifens;
- Fig. 4: eine perspektivische Ansicht der Hülsendichtung von der Seite zum Einsetzen des Kabels;
- Fig. 5: eine perspektivische Ansicht der Komponenten der Hülsendichtung; und
- Fig. 6: eine Hülsendichtung zum Verbinden von zwei LED-Streifen.

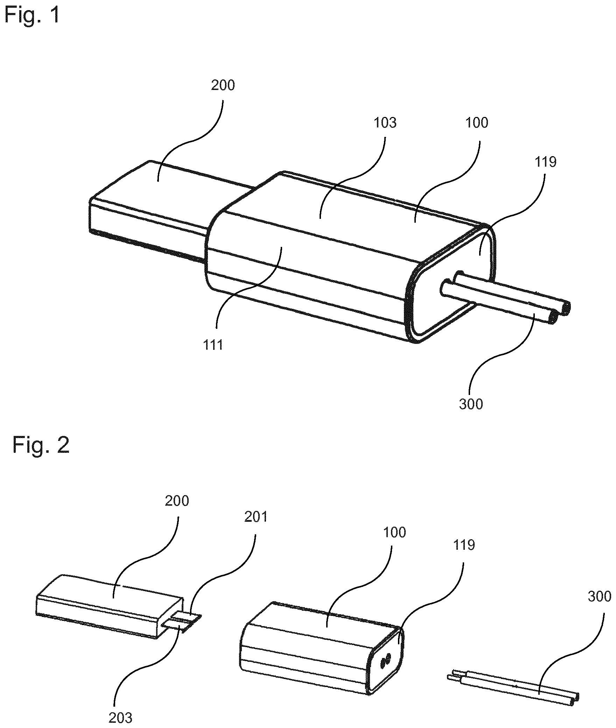

Fig. 1 zeigt eine perspektivische Ansicht einer Hülsendichtung 100 mit eingesetztem Kabel 300 und einem LED-Streifen 200.

Der LED-Steifen 200 umfasst ein Band-oder streifenförmiges Substrat auf dem eine Vielzahl von Leuchtdioden angeordnet ist. An dem Ende des Substrats sind zwei Kontakte angeordnet, über die sich die einzelnen Leuchtdioden mit Energie versorgen lassen.

Das Substrat kann beispielsweise aus einem flexiblen Kunststoffband gebildet sein. LED-Streifen eignen sich für eine platzsparende Beleuchtung auf kleinem Raum. Da LEDs kaum Wärme erzeugen ist auch die Verwendung der LED-Streifen als indirekte Beleuchtung direkt in Möbeln möglich.

Der Hülsendichtung 100 umfasst ein quaderförmiges Hülsengehäuse 103, das abgeschrägte oder abgerundete Längskanten 111 aufweist, beispielsweise eine Kunststofftülle. Das Hülsengehäuse 103 umgibt den LED-Streifen 200 an seinem Verbindungsende und ermöglicht eine wasserfeste Abdichtung eines Anschlusses oder eines Verbindungsbereiches des LED-Streifens.

Das Hülsengehäuse 103 umfasst ein Dichtelement 119 zum abgedichteten Einführen von Kabeln 300 in das Hülsengehäuse 103. Die Kabel 300 sind mit den elektrischen Anschlüssen des LED-Streifens verbunden und dienen der Energie- und Spannungsversorgung. Durch die Hülsendichtung 100 lässt sich eine Handhabung zum Herstellen einer wasserfesten Abdichtung von LED-Streifenanschlüssen und -verbindungen verbessern.

Das Hülsengehäuse 103 wird von einem Benutzer über die Anschluss- bzw. Verbindungsstelle des LED-Streifens geschoben. Dabei wird die wasserfeste Abdichtung zwischen dem Hülsengehäuse 103 und dem flexiblen, wasserfesten LED-Streifen 200 und zu den Kabeln 300 durch entsprechende Dichtelemente hergestellt. Das Hülsengehäuse 103 kann transparent ausgeführt sein, so dass auch LEDs im Anschlussbereich nicht von dem Hülsengehäuse 103 abgedeckt werden. Daneben wird eine optische Überprüfung der korrekten Position des Hülsengehäuses 103 zum LED-Streifen 200 durch einen Benutzer ermöglicht. Das Dichtelement 119 kann transparent oder intransparent ausgeführt sein.

Fig. 2 zeigt eine perspektivische Ansicht der Hülsendichtung 100 mit getrenntem Kabel 300 und LED-Streifen 200. Das Kabel 300 wird von der einen Seite in den Hülsendichtung 100 mit dem Dichtelement 119 geführt. Der LED-Streifen mit den elektrischen Anschlüssen 201 und 202 wird von der anderen Seite in das Hülsengehäuse 103 geführt. Das Hülsengehäuse 103 umgibt die elektrische Verbindung zwischen dem Kabel 300 und dem LED-Streifen 200.

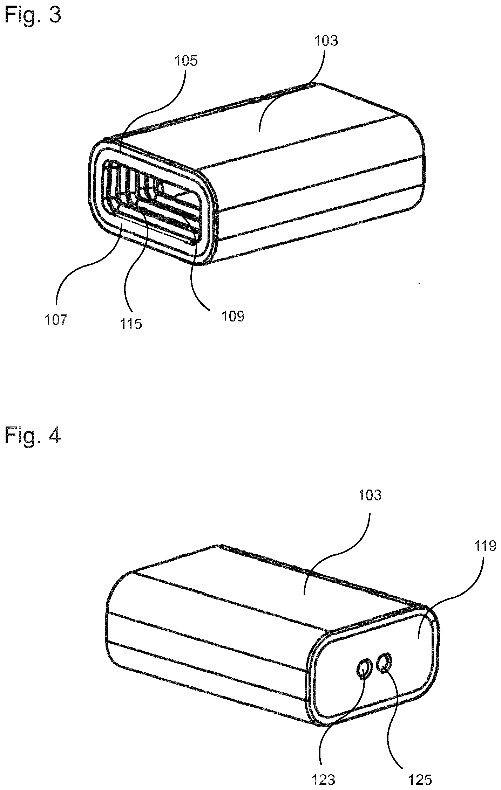

Fig. 3 zeigt eine perspektivische Ansicht der Hülsendichtung 100 von der Seite zum Einsetzen des LED-Streifens 200. Das Hülsengehäuse 103 weist eine Gehäuseöffnung 105 zum formschlüssigen Aufnehmen des Dichtelementes 107 auf. Das Dichtelement 107 füflt den Zwischenraum zwischen dem LED-Streifen 200 und dem Hülsengehäuse 103 aus und dient zum Abdichten eines Verbindungsbereiches zum LED-Streifen 200.

Das Dichtelement 107 weist eine im Querschnitt rechteckige Dichtungsöffnung 109 auf, in die der LED-Streifen einsetzbar ist. Auf der Innenseite der Dichtungsöffnung 109 befinden sich umlaufende Lamellen 115, die beim Einsetzen des LED-Streifens auf diesem aufliegen. Durch diese Lamellen 115 lässt sich die Verbindung mit dem LED-Streifen besonders wirkungsvoll abdichten, so dass ein Eintreten von Wasser verhindert wird. Die Lamellen 115 können beispielsweise eine im Querschnitt keilförmige Form aufweisen.

Das Dichtelement 107 kann aus einem elastischen transparenten Material hergestellt sein, wie beispielsweise einem transparenten Silikon, um keine LEDs zu verdecken. Das Dichtelement 107 kann an dem Hülsengehäuse 103 angespritzt sein oder als Einzelteil vorliegen.

Fig. 4 zeigt eine perspektivische Ansicht der Hülsendichtung 100 von der Seite zum Einsetzen des Kabels 300. Zum Einführen des Kabels 300 dient das Dichtelement 119, das zwei Öffnungen 123 und 125 zum Einführen der Kabel 300 aufweist. Das Dichtelement 119 ist in das Hülsengehäuse 103 von der Seite aus einsteckbar, die der Seite mit dem Dichtelement 107 gegenüberliegt. Das Dichtelement 119 ist derart gestaltet, dass ein Eindringen von Wasser entlang der Kabel 300 verhindert wird. Zu diesem Zweck kann das Dichtelement 119 aus einem transparenten oder intransparenten, elastischen Material hergestellt sein.

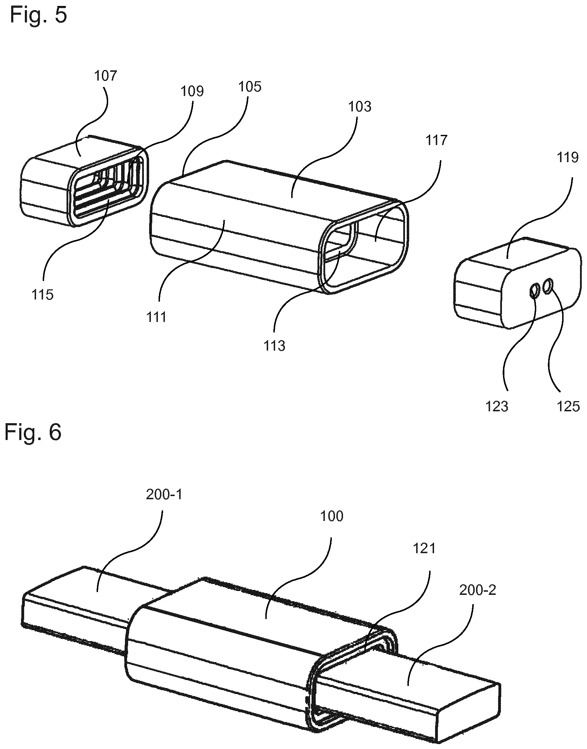

Fig. 5 zeigt eine perspektivische Ansicht einzelner Komponenten der Hülsendichtung 100. Auf der einen Seite des Hülsengehäuses 103 wird das Dichtelement 107 mit der Dichtungsöffnung 109 und den umlaufenden Lamellen 115 in die Hülsengehäuseöffnung 105 eingeführt. Auf der anderen Seite des Hülsengehäuses 103 wird das Dichtelement 119 mit den Öffnungen 123 und 125 in die Hülsengehäuseöffnung 117 eingeführt. Im Inneren umfasst das Hülsengehäuse jeweils eine Anschlagskante 113, an der beim Einsetzen das Dichtelement 119 oder das Dichtelement 107 anstoßen. Das Hülsengehäuse 103 umfasst daher eine Anschlagskante zum Bilden eines Anschlags beim Einsetzen eines Dichtelements 107, 121 oder 119. Dadurch wird beispielsweise der technische Vorteil erreicht, dass sich das Dichtelement exakt innerhalb des Gehäuses positionieren lässt. Das Hülsengehäuse 103 kann zudem ein Rastmittel zum Eingreifen in ein Dichtelement umfassen. Dadurch lässt sich eine Montage der Hülsendichtung 100 vereinfachen.

Fig. 6 zeigt eine Hülsendichtung 100 zum Verbinden von zwei LED-Streifen 200-1 und 200-2. Zu diesem Zweck ist auf der rechten Seite des Hülsengehäuses 103 ein erstes Dichtelement 107 und auf der anderen Seite des Hülsengehäuses 103 ein zweites Dichtelement 121 angeordnet. Das zweite Dichtelement 121 entspricht dem ersten Dichtelement 107. Dadurch lässt sich eine wasserfeste Verbindung zwischen zwei LED-Streifen herstellen.

Das Dichtungssystem für einen wasserfesten LED-Streifenanschluss umfasst ein Hülsengehäuse 103 und je nach Anwendungsfall entweder zwei Dichtelemente 107 und 121 zum Abdichten des Verbindungsbereiches zwischen zwei LED-Streifen 200-1 und 200-2 oder ein Dichtelement 107 zum Abdichten des Anschlussbereiches zum LED-Streifen und ein Dichtelement 119 zum Abdichten des Anschlussbereiches zum Kabel 300.

Die Dichtelemente 107, 121 und 119 können an dem Hülsengehäuse 103 unverlierbar angespritzt sein. Die Dichtelemente 107, 121 und 119 können jedoch auch zusätzlich zum Hülsengehäuse 103 als Einzelteile vorliegen, was einen flexiblen Aufbau durch einen Benutzer ermöglicht. Das Hülsengehäuse 103 kann aus einem transparenten Kunststoff gefertigt sein. Die Dichtelemente 107 und 121 können aus einem transparenten oder transluzenten elastischem Werkstoff hergestellt sein. Das Dichtelement 119 kann aus einem transparenten oder transluzenten, elastischen oder intransparenten, elastischen Werkstoff hergestellt sein. Im Allgemeinen können jedoch auch alle anderen Materialien mit beliebigen optischen Eigenschaften verwendet werden, die geeignet sind, die jeweiligen Elemente zu bilden.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Hülsendichtung
- 103: Hülsengehäuse
- 105: Gehäuseöffnung
- 107: Dichtelement
- 109: Dichtungsöffnung
- 111: Längkanten
- 113: Anschlagskante
- 115: Lamellen
- 117: Gehäuseöffnung
- 119: Dichtelement
- 121: Dichtelement
- 123: Öffnung
- 125: Öffnung
- 200: LED-Streifen
- 200-1: LED-Streifen
- 200-2: LED-Streifen
- 201: Elektrischer Anschluss
- 202: Elektrischer Anschluss
- 300: Kabel

## Patentansprüche

1. Hülsendichtung (100) zum Abdichten eines Leitungsverbindungsbereichs von LED-Streifen (300) gegen Feuchtigkeit, mit:
einem Hülsengehäuse (103), das einen rechteckförmigen Querschnitt aufweist und über einem Leitungsverbindungsbereich verschiebbar positionierbar ist; und
einem Dichtelement (107) zum Abdichten des Hülsengehäuses (103) gegen Feuchtigkeit, das eine im Querschnitt rechteckige Dichtungsöffnung (109) aufweist, in die der LED-Streifen einsetzbar ist.

2. Hülsendichtung (100) nach Anspruch 1, wobei das Dichtelement (107) an einer Innenwandung des Hülsengehäuses (103) positionierbar oder positioniert ist.

3. Hülsendichtung (100) nach Anspruch 1 oder 2, wobei das Dichtelement (107) eine Dichthülse ist, welche in das Hülsengehäuse (103) einschiebbar ist oder welche an einer Innenwandung des Hülsengehäuses (103) gebildet oder angeformt, insbesondere angespritzt ist.

4. Hülsendichtung (100) nach Anspruch 3, wobei das Dichtelement (107) einen Dichthülsenkörper und eine an einer Innenwandung des Dichthülsenkörpers angeordnete Dichtung umfasst.

5. Hülsendichtung (100) nach Anspruch 4, wobei die Dichtung eine zumindest teilweise umlaufende elastische Lamelle (115) oder eine Mehrzahl von zumindest teilweise umlaufenden elastischen Lamellen (115), welche hintereinander angeordnet sind, umfasst.

6. Hülsendichtung (100) nach einem der vorgehenden Ansprüche, wobei das Dichtelement (107) stirnseitig beidseitig oder einseitig offen ist.

7. Hülsendichtung (100) nach einem der vorgehenden Ansprüche, wobei das Dichtelement (119) eine einem Inneren des Hülsengehäuses (103) zugewandte erste Stirnseite und eine dem Inneren des Hülsengehäuses (103) abgewandte zweite Stirnseite aufweist, wobei die erste Stirnseite offen ist und wobei die zweite Stirnseite durch eine Wandung gebildet ist, in welcher zumindest eine Öffnung (123, 125) zur Aufnahme eines Leitungskabels (300) vorgesehen ist.

8. Hülsendichtung (100) nach einem der vorgehenden Ansprüche, wobei das Dichtelement (107) zum Abdichten eines ersten Abschnitts des Hülsengehäuses vorgesehen ist, und wobei ein weiteres Dichtelement (121) zum Abdichten eines zweiten Abschnitts des Hülsengehäuses vorgesehen ist.

9. Hülsendichtung (100) nach Anspruch 8, wobei die Abschnitte einander gegenüber angeordnet sind.

10. Hülsendichtung (100) nach Anspruch 8 oder 9, wobei das Dichtelement (107) und das weitere Dichtelement (121) seitlich an einander gegenüber liegenden Seiten in das Hülsengehäuse (103) einschiebbar oder an einer Innenwandung des Hülsengehäuses (103) gebildet oder angeformt, insbesondere angespritzt sind.

11. Hülsendichtung (100) nach einem der vorgehenden Ansprüche, wobei das weitere Dichtelement (121) einen Dichthülsenkörper und eine an einer Innenwandung des Dichthülsenkörpers angeordnete Dichtung umfasst.

12. Hülsendichtung (100) nach einem der vorgehenden Ansprüche, wobei das Hülsengehäuse (103) einen rechteckförmigen Querschnitt mit abgerundeten Ecken aufweist.

13. Hülsendichtung (100) nach einem der vorgehenden Ansprüche, wobei das Hülsengehäuse (103) und das jeweilige Dichtelement (107) aus Kunststoff geformt sind.

14. Hülsendichtung (100) nach einem der vorgehenden Ansprüche, wobei das Hülsengehäuse transparent ist.

15. Leitungsanordnung, mit:
einer ersten Leitung (200), insbesondere einer LED-Streifenleitung und einer zweiten Leitung (300), welche in einem Verbindungsbereich miteinander elektrisch verbunden sind; und
der Hülsendichtung (100) gemäß einem der Ansprüche 1 bis 14 zum Abdichten des Verbindungsbereichs gegen Feuchtigkeit.

## Claims

1. Sleeve seal (100) for sealing a cable connection region of LED-strips (300) against moisture, comprising:
a sleeve housing (103) which comprises a rectangular cross-section and is displaceably positionable over a cable connection region; and
a sealing element (107) for sealing the sleeve housing (103) against moisture, which comprises a sealing opening (109) rectangular in cross section, in which the LED-strip is insertable.

2. Sleeve seal (100) according to claim 1, wherein the sealing element (107) is positionable or positioned onto an inner wall of the sleeve housing (103).

3. Sleeve seal (100) according to claim 1 or 2, wherein the sealing element (107) is a sealing sleeve, which is insertable into the sleeve housing (103) or which is formed or molded, in particular injected, onto an inner wall of the sleeve housing (103).

4. Sleeve seal (100) according to claim 3, wherein the sealing element (107) comprises a sealing sleeve body and a seal arranged onto an inner wall of the sealing sleeve body.

5. Sleeve seal (100) according to claim 4, wherein the seal comprises an at least partially circumferential elastic lamella (115) or a plurality of at least partially circumferential elastic lamellas (115) which are arranged one after the other.

6. Sleeve seal (100) according to any one of the preceding claims, wherein the sealing element (107) is open on one side or two sides on the frontal face.

7. Sleeve seal (100) according to any one of the preceding claims, wherein the sealing element (107) comprises a first frontal face facing an interior of the sleeve housing (103) and a second frontal face facing away from the interior of the sleeve housing (103), wherein the first frontal face is open and wherein the second frontal face is formed by a wall in which at least one opening (123, 125) for receiving a cable (300) is provided.

8. Sleeve seal (100) according to any one of the preceding claims, wherein the sealing element (107) is provided for sealing a first section of the sleeve housing, and wherein a further sealing element (121) is provided for sealing a second section of the sleeve housing.

9. Sleeve seal (100) according to claim 8, wherein the sections are arranged opposite each other.

10. Sleeve seal (100) according to claim 8 or 9, wherein the sealing element (107) and the further sealing element (121) are insertable laterally on opposite sides into the sleeve housing (103) or are formed or molded, in particular injected, onto an inner wall of the sleeve housing (103).

11. Sleeve seal (100) according to any one of the preceding claims, wherein the further sealing element (121) comprises a sealing sleeve body and a seal arranged onto an inner wall of the sealing sleeve body.

12. Sleeve seal (100) according to any one of the preceding claims, wherein the sleeve housing (103) comprises a rectangular cross-section with rounded corners.

13. Sleeve seal (100) according to any one of the preceding claims, wherein the sleeve housing (103) and the respective sealing element (107) are formed out of plastics.

14. Sleeve seal (100) according to any one of the preceding claims, wherein the sleeve housing is transparent.

15. Cable assembly, comprising:
a first cable (200), in particular an LED strip cable, and a second cable (300), which are electrically connected to each other in a connection region; and
the sleeve seal (100) according to any one of claims 1 to 14 for sealing the connection region against moisture.

## Revendications

1. Joint de manchon (100) pour étancher une région de connexion de conduite de bandes d'LED (300) contre l'humidité, comportant:
un boîtier de manchon (103) qui présente une section transversale rectangulaire et qui est positionnable sur une région de connexion de conduite de façon déplaçable; et
un élément d'étanchéité (107) pour étancher le boîtier de manchon (103) contre l'humidité qui présente une ouverture d'étanchéité ayant une section transversale rectangulaire (109), dans laquelle la bande d'LED est insérable.

2. Joint de manchon (100) selon la revendication 1, dans lequel l'élément d'étanchéité (107) est positionnable ou positionné sur une paroi intérieure du boîtier de manchon (103).

3. Joint de manchon (100) selon la revendication 1 ou 2, dans lequel l'élément d'étanchéité (107) est un manchon d'étanchéité qui est insérable dans le boîtier de manchon (103) ou qui est formé ou moulé, en particulier moulé par injection, sur une paroi intérieure du boîtier de manchon (103).

4. Joint de manchon (100) selon la revendication 3, dans lequel l'élément d'étanchéité (107) comporte un corps de manchon d'étanchéité et un joint disposé sur une paroi intérieure du corps de manchon d'étanchéité.

5. Joint de manchon (100) selon la revendication 4, dans lequel le joint comporte une lamelle élastique au moins partiellement circonférentielle (115) ou une pluralité de lamelles élastiques au moins partiellement circonférentielles qui sont disposées successivement.

6. Joint de manchon (100) selon l'une des revendications précédentes, dans lequel l'élément d'étanchéité (107) est ouvert sur les deux faces ou sur une face sur la face frontale.

7. Joint de manchon (100) selon l'une des revendications précédentes, dans lequel l'élément d'étanchéité (119) présente une première face frontale tournée vers un intérieur du boîtier de manchon (103) et une deuxième face frontale opposée à intérieur du boîtier de manchon (103), dans lequel la première face frontale est ouverte et dans lequel la deuxième face frontale est formée par une paroi dans laquelle au moins une ouverture (123, 125) est prévue pour recevoir un câble de conduite (300).

8. Joint de manchon (100) selon l'une des revendications précédentes, dans lequel l'élément d'étanchéité (107) est prévu pour étancher une première section du boîtier de manchon et dans lequel un autre élément d'étanchéité (121) est prévu pour étancher une deuxième section du boîtier de joint.

9. Joint de manchon (100) selon la revendication 8, dans lequel les sections sont disposées opposées l'une à l'autre.

10. Joint de manchon (100) selon la revendication 8 ou 9, dans lequel l'élément d'étanchéité (107) et l'autre élément d'étanchéité (121) sont insérables latéralement sur des faces disposées opposées l'une à l'autre dans le boîtier de manchon (103) ou sont formés ou moulés, en particulier moulés par injection, sur une paroi intérieure du boîtier de manchon (103).

11. Joint de manchon (100) selon l'une des revendications précédentes, dans lequel l'autre élément d'étanchéité (121) comporte un corps de manchon d'étanchéité et un joint disposé sur une paroi intérieure du corps de manchon d'étanchéité.

12. Joint de manchon (100) selon l'une des revendications précédentes, dans lequel le boîtier de manchon (103) présente une section transversale rectangulaire avec des coins arrondis.

13. Joint de manchon (100) selon l'une des revendications précédentes, dans lequel le boîtier de manchon (103) et l'élément d'étanchéité respectif (107) sont formés en matière plastique.

14. Joint de manchon (100) selon l'une des revendications précédentes, dans lequel le boîtier de manchon est transparent.

15. Arrangement de conduite, comportant:
une première conduite (200), en particulier une conduite de bandes d'LED, et
une deuxième conduite (300) qui sont connectées électriquement l'une à l'autre dans une région de connexion; et
le joint de manchon (100) selon l'une des revendications 1 à 14 pour étancher la région de connexion contre l'humidité.
